# EUROPÄISCHE PATENTSCHRIFT

(11) **EP 0 780 705 B1**
(45) Veröffentlichungstag und Bekanntmachung des Hinweises auf die Patenterteilung: **19.03.2003**
(21) Anmeldenummer: 96119649.0
(22) Anmeldetag: 06.12.1996
(51) Int. Cl.: G01V 3/10

(54) **Elektromagnetisches Suchverfahren und Sondenanordnung zur Ortung von unter der Oberfläche liegenden Objekten**
Electromagnetic search method and probe assembly for locating underground objects
Procédé de recherche et agencement des sondes pour localiser des objets souterrains

(30) Priorität: 21.12.1995 DE 19547956
(43) Veröffentlichungstag der Anmeldung: 25.06.1997
(73) Patentinhaber: FIRMA ING. KLAUS EBINGER, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- EP-A- 0 186 570
- EP-A- 0 494 130
- US-A- 4 875 014
- US-A- 5 130 655
- US-A- 5 467 018

## Beschreibung

Die Erfindung betrifft ein elektromagnetisches Suchverfahren zum Orten von unter der Oberfläche liegenden Objekten, insbesondere im Boden oder im Wasser, nach dem Oberbegriff des Anspruchs 1 sowie eine Sondenanordnung zum Orten von unter der Oberfläche, insbesondere im Boden oder im Wasser, liegenden Objekten, nach dem Oberbegriff des Anspruchs 5.

Bei einem gattungsgemäßen Verfahren wird eine große Sendeschleife stationär in einem Suchbereich angeordnet, wird von der Sendeschleife ein gepulstes Magnetfeld ausgesendet, welches detektionsfähige Objekte zur Abstrahlung von Sekundärsignalen veranlaßt, werden die Sekundärsignale mit einer Sonde mit mindestens zwei in einem definierten Abstand vorgesehenen Empfangswicklungen detektiert, wird die Sonde im Bereich der Sendeschleife eingesetzt und werden die von den Empfangwicklungen empfangenen Sekundärsignale einer Auswerteeinheit zur Bestimmung der Objekttiefe zugeführt.

Eine gattungsgemäße Sondenanordnung weist folgende Komponenten auf: eine große stationäre Sendeschleife zum Aussenden von gepulsten Magnetfeldern, eine Sonde mit einem magnetischen Meßkern und mindestens zwei Empfangswicklungen, die einen definierten Abstand zueinander aufweisen, und eine Auswerteeinheit, die mit den Empfangswicklungen in Wirkverbindung steht, zum Auswerten der von den Empfangswicklungen empfangenen Signale.

Ein elektromagnetisches Suchverfahren sowie eine Sondenanordnung der genannten Art sind beispielsweise in der EP 0 494 130 A1 beschrieben, die ein Verfahren sowie eine Vorrichtung zur elektromagnetischen Ermittelung des Ortes von leitenden Teilen im Boden betrifft. Dabei wird zunächst eine große Sendeschleife mit einem Pulsgenerator auf der abzusuchenden Fläche angeordnet. Zum Nachweis von elektromagnetischen Wellen, die von den aufzufindenden leitenden Teilen nach Anregung durch die Sendespule ausgesandt werden, sind in einer Sonde drei Spulen vorgesehen, welche in linear unabhängigen Richtungen zueinander angeordnet sind. Weiterhin wird das von der Sendespule ausgesandte Primärfeld mit mindestens einer Referenzspule gemessen, welche außerhalb der Sonde oberhalb oder unterhalb der Oberfläche angeordnet ist.

Gegenstand der US-5,130,655 ist eine Bohrlochsonde mit einer Vielzahl von Spulenpaaren, welche achsparallel in einem im Wesentlichen zylindrischen Gehäuse angeordnet sind.

Die US-4,875,014 betrifft ein Verfahren sowie eine Vorrichtung zur Überwachung einer unterirdischen Bohrung. Dabei wird zunächst mit einer großen, auf der Oberfläche des zu überwachenden Bereichs angeordneten Spule ein Magnetfeld erzeugt. Mit Hilfe einer in einem Bohrrohr angeordneten Sensoreinheit werden die lokale Magnetfeldstärke und die Beschleunigung in allen drei Raumrichtungen gemessen. Mit Hilfe einer Telemetrieeinheit werden die ermittelten Daten zu einem externen Auswerterechner übertragen.

In der EP 0 186 570 A2 ist eine Vorrichtung zur Durchführung von Bohrlochmessungen beschrieben, die primär zur Bestimmung der dielektrischen Funktion einer die Bohrung umgebenden Boden- und/oder Gesteinsformation eingesetzt wird.

Eine Sonde weist hierfür eine Mehrzahl von Sende- und Empfangsspulen auf.

Ein Verfahren zur geophysikalischen Untersuchung des Bodens, bei welchem zunächst mit Hilfe einer Sendeeinrichtung ein elektromagnetisches Signal in den Boden eingebracht wird und anschließend die elektromagnetische Antwort des Bodens mit mehreren Empfangsspulen, welche im Abstand von einigen Kilometern voneinander angeordnet sind, gemessen wird, ist in der US-5,467,018 offenbart. Dabei wird jedoch zur Einstrahlung des elektromagnetischen Signals in den Boden keine große, auf der abzusuchenden Fläche angeordnete Spule verwendet.

Gattungsgemäße Suchverfahren werden zur Lokalisation von Metallobjekten, insbesondere bei der Ortung von tiefliegenden Bomben im Bereich der Kampfmittelräumung angewandt. Dabei wird insbesondere die sogenannte Bohrlochsondierung eingesetzt, bei der eine Sonde in ein Bohrloch abgesenkt wird, um zum einen die signalmäßige Oberflächenverseuchung zu umgehen und zum anderen die Ortungsreichweite der Suchgeräte zu erhöhen. Schon ein geringer Störpegel kann das Auffinden einer tiefliegenden Bombe verhindern. Auch die Bodenformation spielt bei der Ermittlung der Tiefenlage der gesuchten Objekte eine große Rolle.

Grundsätzlich wird zwischen aktiven und passiven Suchmethoden bei der Bohrlochsondierung unterschieden. Die aktiven bzw. elektromagnetischen Verfahren sind in der Vergangenheit nur vereinzelt eingesetzt worden, da die Ortungsreichweite der aktiven Verfahren, die mit elektromagnetischen Wechselfeldern arbeiten, relativ gering sind und nicht zu zufriedenstellenden Ergebnissen geführt haben.

Wegen der größeren Reichweite kamen bisher fast ausschließlich passive bzw. magnetische Verfahren bei der Bohrlochsondierung zum Einsatz. Die dabei eingesetzten Feldstärkedifferenzmesser sind so ausgebildet, daß sie Störungen im magnetischen Erdfeld durch eine Differenzmessung ermitteln. Im Prinzip besteht die Suchanordnung aus zwei magnetempfindlichen, räumlich genau ausgerichteten Induktoren, die in einer Art Brücke gegeneinander geschaltet sind. Bei homogenem Feldverlauf kompensiert die Suchanordnung das magnetische Erdfeld so, daß die Sonde ohne nennenswerte Anzeige im Raum bewegt werden kann. Gelangt in die Nähe dieser Anordnung ein magnetischer Gegenstand, so wird nicht nur die Intensität der magnetischen Störung, sondern auch ihre Feldrichtung angezeigt. Nachteilig ist bei diesem passiv magnetischen Verfahren jedoch, daß jede Störung im Erdfeld, magnetische Böden und Steine, Eisenkonstruktionen und andere Störphänomene das Suchen erheblich erschweren. Auch weitergehende Informationen lassen sich mit diesem Verfahren nur schwer ermitteln.

Der Erfindung liegt daher die **Aufgabe** zugrunde, ein Verfahren und eine Sondenanordnung zum Orten von unter der Oberfläche liegenden Objekten zu schaffen, mit dem beziehungsweise mit der die Objekte besonders genau geortet werden können und eine genaue Bestimmung der Objekttiefe möglich ist.

Diese Aufgabe wird erfindungsgemäß durch ein Suchverfahren mit den Merkmalen des Patentanspruches 1 sowie durch eine Sondenanordnung mit den Merkmalen des Patentanspruches 5 gelöst.

Vorteilhafte Weiterbildungen sind Gegenstand der Unteransprüche.

Ein elektromagnetisches Suchverfahren der oben angegebenen Art ist erfindungsgemäß dadurch weitergebildet, daß das Magnetfeld der Sendeschleife direkt von einer oberen Empfangswicklung, die an einem oberen Ende der Sonde angeordnet ist, und von einer unteren Empfangswicklung, die an einem unteren Ende der Sonde angeordnet ist, empfangen wird, daß die von der oberen und der unteren Empfangswicklung empfangenen Signale einer weiteren Auswerteeinheit zugeführt werden und daß die weitere Auswerteeinheit aus einer Differenz der empfangenen Signale die Entfernung der Sonde von der Sendeschleife berechnet.

Die Sonde wird bevorzugt vertikal bewegt und dabei in ein Bohrloch abgesenkt. Es besteht jedoch auch die Möglichkeit, die Suchanordnung für die Ortung oberflächlich liegender Metallobjekte, wie Munition einzusetzen und dazu die Sonde horizontal im Bereich der Sendeschleife zu bewegen. Die Bohrlochachse befindet sich bevorzugt im Mittelpunkt der stationären Sendeschleife, die bevorzugt kreisförmig oder quadratisch ausgelegt ist, jedoch auch in davon abweichender Form angewendet werden kann. Der Schleifendurchmesser der Sendeschleife ist um ein Vielfaches, mindestens den Faktor 10, größer als der Bohrlochdurchmesser.

Die Erfindung kann auf die gleiche Weise am Meeresboden eingesetzt werden oder auch an der Wasseroberfläche, um beispielsweise Treibminen zu orten und zu bestimmen, in welcher wassertiefe sich diese befinden. Dazu wird eine große Sendeschleife, z.B. als stabiler Rahmen, von einem Schiff mitgeführt und die Sonde an einem Kabel oder einer Stange in das Wasser herabgelassen. Eine feste Verbindung wie eine Stange wird vorzugsweise bei Strömung oder bei Messung während der Fahrt des Schiffes angewendet.

Erfindungsgemäß ist vorgesehen, zwei Empfangsschleifen mit einem definierten Abstand zueinander direkt zum Empfang des ausgesendeten Magnetfelds auszubilden und aus den unterschiedlich stark empfangenen Signalen, bei definiertem konstanten Abstand der Empfangsschleifen, die Entfernung der Sonde zur Sendeschleife zu berechnen. Auf diese Weise kann die Informationsermittlung in zwei Teile getrennt werden. Zum einen wird jeweils die Tiefe der Sonde gemessen und damit die Tiefe des Objekts bestimmt, indem die Sondentiefe an der Stelle ermittelt wird, an der das Objektsignal seine maximale Intensität hat. Neben der Intensität des Objektsignals wird auch dessen Richtung und Form ausgewertet, um weitergehende Informationen über Lage, Art und Form des Objekts zu ermitteln.

In den Empfangswicklungen wird üblicherweise ein Strom- oder Spannungssignal gemessen. In einer bevorzugten Weiterbildung sind die Empfangswicklungen als Schwingkreise ausgebildet, so daß der Abfall der induzierten Schwingungen gemessen werden kann. Die durch das Sekundärsignal erregten Sinusspannungen fallen nach einer e-Funktion ab. Auf diese Weise kann eine exaktere Entfernungsmessung durchgeführt werden. Dieses Verfahren kann sowohl für die Wicklungen zur Tiefenmessung der Sonde als auch für die Wicklungen zur Messung der vom Objekt ausgesandten Sekundärstrahlung angewandt werden. Beide Messungen können in einer bevorzugten Ausführungsform der Erfindung auch abwechselnd von denselben Wicklungen durchgeführt werden.

In einer anderen bevorzugten Weiterbildung werden die einzelnen Empfangskanäle zu vorgebbaren Zeiten abgetastet und die abgetasteten Signale werden durch eine schaltungstechnische Verknüpfung weiter verarbeitet. Dadurch kann die auswertbare Intensität jedes einzelnen Signals stark erhöht werden. Auch eine weitergehende Auswertung der Signalinformation zur Objektspezifizierung wird durch eine solche Abtastung der einzelnen Signale erreicht.

In ähnlicher Weise ist es möglich, auch die Gesamtheit aller Empfangskanäle abzutasten und die Signale der verschiedenen Empfangskanäle durch eine schaltungstechnische Verknüpfung weiter zu verarbeiten. Aus dieser Verknüpfung der verschiedenen Empfangskanäle lassen sich insbesondere Informationen über Lage und Ort des detektierten Objekts ableiten, da die unterschiedlichen Signale durch die unterschiedliche Raumposition der verschiedenen Empfangswicklungen hervorgerufen werden. Bei der Auswertung der verschiedenen Signale sind sowohl Addition, als auch Subtraktion einzelner Kanäle oder auch andere mathematische Verknüpfungen denkbar.

Eine Sondenanordnung der oben angegebenen Art ist erfindungsgemäß dadurch weitergebildet, daß jede der Empfangswicklungen an einen Empfangskanal angeschlossen ist, daß eine obere Empfangswicklung und eine untere Empfangswicklung vorgesehen ist, die jeweils zum direkten Empfang des von der Sendeschleife ausgesandten Magnetfelds ausgelegt sind, daß die obere Empfangswicklung an einem oberen Ende der Sonde und die untere Empfangswicklung an einem unteren Ende der Sonde angeordnet ist und daß zum Auswerten der von der oberen und der unteren Empfangswicklung empfangenen Signale und zur Berechnung der Entfernung der Sonde von der Sendeschleife eine weitere Auswerteeinheit vorgesehen ist, die mit der oberen und der unteren Empfangswicklung in Werkverbindung steht.

Zwei Empfangswicklungen sind entweder zusätzlich oder ausschließlich zum Empfang der direkt von der Sendeschleife ausgesandten Magnetfelder ausgelegt. Erfindungsgemäß sind dies die Wicklungen am oberen und unteren Ende der Sonde, da diese über einen maximalen, definierten Abstand verfügen und so eine besonders exakte Tiefenbestimmung der Sonde ermöglichen.

Bevorzugterweise ist jedoch eine Vielzahl von Empfangswicklungen auf dem Meßkern angeordnet.

In einer anderen bevorzugten Weiterbildung sind die Empfangswicklungen als Schwingkreise mit einer Kapazität und einer Induktivität ausgebildet, um die Genauigkeit der Messung weiter zu erhöhen.

Die Sonde weist in einer weiteren bevorzugten Ausführungsform einen internen Pulssender auf, der über mindestens zwei Wicklungen ein für die Feinsondierung scharf gebündeltes Magnetfeld emittiert. Dies ist vor allem dort von Vorteil, wo in unmittelbarer Nähe größerer Metallmassen gesucht werden muß. Dieser Störeinfluß wird durch die zeitlichen Differenzen der empfangenen Pulssignale bestimmt und dann herausgerechnet.

Die Empfangskanäle sind günstigerweise mit einer Sample- und Hold-Schaltung versehen und an einen Mikroprozessor angeschlossen, um die einzelnen Signale detailliert untersuchen zu können.

Die Sonde ist günstigerweise zylindrisch aufgebaut und zur Aufnahme der Elektronik geeignet. In der Sonde erfolgt auch die Aufbereitung der Meßdaten. Die Sonde ist bevorzugt mit einem Kabel mit einer externen Elektronikeinheit verbunden. Dieses Kabel übernimmt die Stromversorgung und den Datentransfer. Die Daten können jedoch auch über eine drahtlose Funkverbindung zur externen Elektronikeinheit gefunkt werden. Diese kann vom Bediener getragen werden und dient zur Speicherung und weiteren Aufbereitung der Daten zur Visualisierung auf einem Bildschirm. In einer anderen Ausgestaltung der Erfindung ist ein telemetrisches Positionierungssystem zur Ermittlung und Darstellung des Objektorts in Relation zur Sendeschleife vorgesehen. Dadurch vereinfacht sich die Darstellung und Zuordnung der Meßdaten auf dem Computerschirm.

Nachfolgend wird die Erfindung anhand eines in der schematischen Zeichnung dargestellten Ausführungsbeispiels näher beschrieben. Im einzelnen zeigen die schematischen Darstellungen in:
- Fig. 1: eine Sendeschleife und die in ein Bohrloch herabgelassene Sonde; und
- Fig. 2: eine an der Oberfläche eingesetzte Sonde.

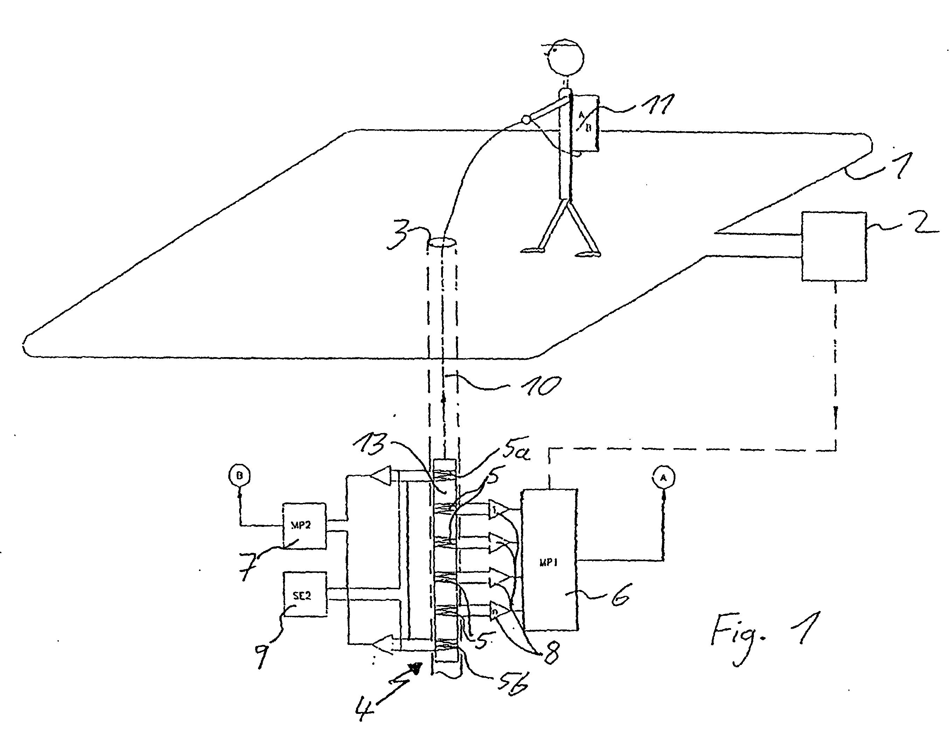

In Figur 1 ist eine große, auf dem Boden verlegte, stationäre Sendeschleife 1 dargestellt, die durch einen Pulssender 2 betrieben wird. Die Sendeschleife 1 hat Quadrat- oder Kreisform und einen mindestens um den Faktor 10 größeren Durchmesser als das Bohrloch. Der Pulssender 2 sendet in vorgegebenen Zeitintervallen Strompulse durch die Sendeschleife 1, wodurch sich der Strom in einer Sprungfunktion ändert und ein weitläufiges Magnetfeld erzeugt, das sich in den vorgegebenen Zeitintervallen auf- und abbaut. Die Sendeschleife 1 wird so ausgelegt, daß das Bohrloch 3 im Zentrum der Sendeschleife liegt, um so maximale Intensitäten zu erreichen. Gelangen detektionsfähige Objekte, insbesondere Metallgegenstände, in den Wirkungsbereich des gepulsten Magnetfeldes, so werden darin Wirbelströme induziert, die zu einem Sekundärfeld führen. Dieses Sekundärfeld wird durch die Empfangswicklungen 5 der Sonde 4 als Ortungssignal aufgenommen, abgespeichert und in einem Mikroprozessor 6 analysiert. Die oberste Empfangswicklung 5a und die unterste Empfangswicklung 5b sind zum direkten Empfang des von der Sendeschleife 1 abgegebenen Primärsignals ausgelegt. Die Empfangwicklungen 5a und 5b sind mit einem separaten Empfangssystem und Verstärker verbunden, welche die relativen Induktionswerte, die durch die Entfernung der Sonde 4 zur Sendeschleife 1 entstehen, aufnehmen. Ein zweiter Mikroprozessor 7 hat die Aufgabe, aus den unterschiedlich starken Amplitudenwerten eine Entfernungsangabe zu errechnen. Ein interner Pulssender 9 steuert ebenfalls die Wicklungen 5a und 5b an, um ein scharf gebündeltes Magnetfeld zur Feinsondierung zu emittieren. Auch durch dieses Magnetfeld kann ein Objekt zur Abstrahlung eines Sekundärsignals angeregt werden, welches wiederum von den Empfangswicklungen 5 empfangen, in damit verbundenen Verstärkern 8 verstärkt wird und vom Mikroprozessor 6 ausgewertet wird. Die Wicklungen 5a und 5b können ebenfalls zur Auswertung der Objektsignale mit an den Mikroprozessor 6 angeschlossen werden. Die gesamte im unteren Bereich der Zeichnung dargestellte Elektronik ist zweckmäßigerweise in der Sonde 4 angeordnet und die Ergebnisse der Mikroprozessoren 6 und 7 werden über ein Kabel 10 in die externe Elektronikeinheit 11 des Bedieners geleitet. Die von den Mikroprozessoren 6 und 7 (MP1 und MP2) errechneten Ergebnisse werden von den Kreisen A und B symbolisiert und über das Kabel 10 oder über eine Funkverbindung an die Elektronikeinheit 11 des Bedieners geleitet.

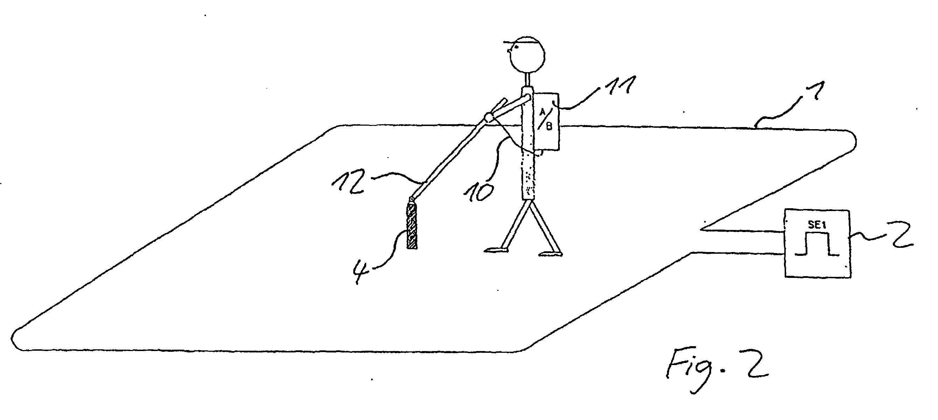

In Figur 2 ist dargestellt, daß die Suchanordnung mit der Sonde 4 auch für die Ortung oberflächlich liegender Objekte eingesetzt werden kann. Auch hier besteht die Möglichkeit, mit der Sendeschleife 1, mit dem Pulssender 2 oder dem internen Pulsgenerator 9 innerhalb der Sonde 4 zu senden. Die Sonde 4 ist über ein Scharnier an einer Tragstange 12 angehängt, so daß sie immer senkrecht zum Boden ausgerichtet ist. Die Tiefe wird in diesem Fall durch die Auswertung des Sekundärsignals bestimmt, welches an den unterschiedlich positionierten Empfangswicklungen unterschiedlich stark empfangen wird.

## Patentansprüche

1. Elektromagnetisches Suchverfahren zum Orten von unter einer Oberfläche liegenden Objekten, insbesondere im Boden oder im Wasser, bei dem
- eine große Sendeschleife stationär in einem Suchbereich angeordnet wird,
- von der Sendeschleife ein gepulstes Magnetfeld ausgesendet wird, welches detektionsfähige Objekte zur Abstrahlung von Sekundärsignalen veranlaßt,
- die Sekundärsignale mit einer Sonde mit mindestens zwei in einem definierten Abstand vorgesehenen Empfangswicklungen detektiert werden,
- die Sonde im Bereich der Sendeschleife eingesetzt wird, und
- die von den Empfangswicklungen empfangenen Sekundärsignale einer Auswerteeinheit zur Bestimmung der Objekttiefe zugeführt werden,
**dadurch gekennzeichnet,**
- **daß** das Magnetfeld der Sendeschleife direkt von einer oberen Empfangswicklung, die an einem oberen Ende der Sonde angeordnet ist, und von einer unteren Empfangswicklung, die an einem unteren Ende der Sonde angeordnet ist, empfangen wird,
- **daß** die von der oberen und der unteren Empfangswicklung empfangenen Signale einer weiteren Auswerteeinheit zugeführt werden und
- **daß** die weitere Auswerteeinheit aus einer Differenz der empfangenen Signale die Entfernung der Sonde von der Sendeschleife berechnet.

2. Suchverfahren nach Anspruch 1,
**dadurch gekennzeichnet,**
**daß** die Sonde vertikal zur Sendeschleife bewegt wird, und
**daß** die Sonde in ein Bohrloch abgesenkt wird.

3. Suchverfahren nach einem der vorhergehenden Ansprüche 1 bis 2, **dadurch gekennzeichnet,**
**daß** der Abfall der in den Empfangswicklungen induzierten Schwingungen gemessen wird.

4. Suchverfahren nach einem der vorhergehenden Ansprüche 1 bis 3, **dadurch gekennzeichnet,**
**daß** die einzelnen Empfangskanäle zu vorgebbaren Zeiten abgetastet werden und die abgetasteten Signale durch eine schaltungstechnische Verknüpfung weiter verarbeitet werden und/oder
**daß** die Gesamtheit aller Empfangskanäle abgetastet wird und die Signale der verschiedenen Empfangskanäle durch eine schaltungstechnische Verknüpfung weiter verarbeitet werden.

5. Elektromagnetische Sondenanordnung zum Orten von unter der Oberfläche, insbesondere im Boden oder im Wasser, liegenden Objekten, insbesondere zur Durchführung des Verfahrens nach einem der Ansprüche 1 bis 5,
- mit einer großen stationären Sendeschleife (1) zum Aussenden von gepulsten Magnetfeldern,
- mit einer Sonde (4) mit einem magnetischen Meßkern (13) und mindestens zwei Empfangswicklungen (5), die einen definierten Abstand zueinander aufweisen, und
- mit einer Auswerteeinheit (6), die mit den Empfangswicklungen (5) in Wirkverbindung steht, zum Auswerten der von den Empfangswicklungen (5) empfangenen Signale,
**dadurch gekennzeichnet,**
- **daß** jede der Empfangswicklungen (5) an einen Empfangskanal (8) angeschlossen ist,
- **daß** eine obere Empfangswicklung (5a) und eine untere Empfangswicklung (5b) vorgesehen ist, die jeweils zum direkten Empfang des von der Sendeschleife (1) ausgesandten Magnetfelds ausgelegt sind,
- **daß** die obere Empfangswicklung (5a) an einem oberen Ende der Sonde (4) und die untere Empfangswicklung (5b) an einem unteren Ende der Sonde (4) angeordnet ist und
- **daß** zum Auswerten der von der oberen und der unteren Empfangswicklung (5a, 5b) empfangenen Signale und zur Berechnung der Entfernung der Sonde (4) von der Sendeschleife (1) eine weitere Auswerteeinheit (7) vorgesehen ist, die mit der oberen und der unteren Empfangswicklung (5a, 5b) in Wirkverbindung steht.

6. Sondenanordnung nach Anspruch 5,
**dadurch gekennzeichnet,**
**daß** eine Vielzahl von Empfangswicklungen (5) auf dem Meßkern (13) angeordnet ist.

7. Sondenanordnung nach einem der Ansprüche 5 bis 6, **dadurch gekennzeichnet,**
**daß** die Empfangswicklungen (5) als Schwingkreise mit einer Kapazität und einer Induktivität ausgebildet sind.

8. Sondenanordnung nach einem der Ansprüche 5 bis 7, **dadurch gekennzeichnet,**
**daß** die Sonde (4) einen internen Pulssender (9) aufweist, mit dem über mindestens zwei Wicklungen (5a, 5b) ein Magnetfeld aussendbar ist.

9. Sondenanordnung nach einem der Ansprüche 5 bis 8, **dadurch gekennzeichnet,**
**daß** die Empfangskanäle (5) mit einer Sample- und Hold-Schaltung versehen sind und an einen Mikroprozessor (6) angeschlossen sind.

10. Sondenanordnung nach einem der Ansprüche 5 bis 9, **dadurch gekennzeichnet,**
**daß** die Sonde (4) zylindrisch ausgebildet ist.

11. Sondenanordnung nach einem der Ansprüche 5 bis 10, **dadurch gekennzeichnet,**
**daß** die Auswerteeinheit und die zugehörige Elektronik in der Sonde (4) angeordnet ist und/oder
**daß** die Sonde (4) mit einem Kabel (10) mit einer externen Elektronikeinheit (11) verbunden ist.

12. Sondenanordnung nach einem der Ansprüche 5 bis 11, **dadurch gekennzeichnet,**
**daß** ein telemetrisches Positionierungssystem zur Ermittlung und Darstellung des Objektorts in Relation zur Sendeschleife vorgesehen ist.

## Claims

1. Electromagnetic search method for locating underground objects, particularly in the earth or in water, in which
- a large transmitting loop is arranged in stationary manner in a search area,
- a pulsed magnetic field is transmitted by the transmitting loop, so that detectable objects emit secondary signals,
- the secondary signals are detected by a probe with at least two receiving windings provided with a clearly defined spacing,
- the probe is introduced into the vicinity of the transmitting loop and
- the secondary signals received by the receiving windings are supplied to an evaluating unit for determining the object depth,
**characterized in that**
- the magnetic field of the transmitting loop is received directly by an upper receiving winding located at an upper end of the probe and by a lower receiving winding located at a lower end of the probe,
- the signals received by the upper and lower receiving windings are supplied to a further evaluating unit and
- the further evaluating unit calculates from the difference of the received signals the distance of the probe from the transmitting loop.

2. Search method according to claim 1,
**characterized in that**
the probe is moved vertically to the transmitting loop and that the probe is lowered into a borehole.

3. Search method according to one of the claims 1 to 2,
**characterized in that**
the decrease of the oscillations induced in the receiving windings is measured.

4. Search method according to one of the claims 1 to 3,
**characterized in that**
the individual receiving channels are scanned at predeterminable times and the scanned signals are further processed by a circuitry link and/or all the receiving channels are scanned and the signals of the different receiving channels are further processed by a circuitry link.

5. Electromagnetic probe assembly for locating underground objects, particularly in the earth or in water, particularly for performing the method according to one of the claims 1 to 5,
- having a large, stationary transmitting loop (1) for transmitting pulsed magnetic fields,
- with a probe (4) with a magnetic measuring core (13) and at least two receiving windings (5) having a clearly defined mutual spacing and
- with an evaluating unit (6), which is in operative connection with the receiving windings (5), for evaluating the signals received by the receiving windings (5),
**characterized in that**
- each of the receiving windings (5) is connected to a receiving channel (8),
- an upper receiving winding (5a) and a lower receiving winding (5b) are provided, which are in each case designed for the direct reception of the magnetic field transmitted by the transmitting loop (1),
- the upper receiving winding (5a) is located at an upper end of the probe (4) and the lower receiving winding (5b) at a lower end of the probe (4) and
- for evaluating the signals received by the upper and lower receiving windings (5a, 5b) and for calculating the distance between the probe (4) and the transmitting loop (1), a further evaluating unit (7) is provided, which is in operative connection with the upper and lower receiving windings (5a, 5b).

6. Probe assembly according to claim 5,
**characterized in that**
the measuring core (13) carries a plurality of receiving windings (5).

7. Probe assembly according to one of the claims 5 and 6,
**characterized in that**
the receiving windings (5) are constructed as resonant circuits with a capacitance and an inductance.

8. Probe assembly according to one of the claims 5 to 7,
**characterized in that**
the probe (4) has an internal pulse transmitter (9) with which a magnetic field can be transmitted via at least two windings (5a, 5b).

9. Probe assembly according to one of the claims 5 to 8,
**characterized in that**
the receiving channels (5) are provided with a sample and hold circuit and are connected to a microprocessor (6).

10. Probe assembly according to one of the claims 5 to 9,
**characterized in that**
the probe (4) has a cylindrical construction.

11. Probe assembly according to one of the claims 5 to 10,
**characterized in that**
the evaluating unit and the associated electronics are located in the probe (4) and/or that the probe (4) is connected by a cable (10) to an external electronic unit (11).

12. Probe assembly according to one of the claims 5 to 11,
**characterized in that**
a telemetric positioning system is provided for determining and displaying the object location relative to the transmitting loop.

## Revendications

1. Procédé de recherche électromagnétique pour localiser des objets situés sous la surface, en particulier dans le sol ou dans l'eau, dans lequel
- une grande boucle émettrice est placée de manière stationnaire dans une zone de recherche,
- un champ magnétique pulsé est émis par la boucle émettrice, lequel conduit des objets détectables à émettre des signaux secondaires,
- les signaux secondaires sont détectés avec une sonde comprenant au moins deux enroulements récepteurs prévus à une distance définie,
- la sonde est utilisée au niveau de la boucle émettrice, et
- les signaux secondaires reçus par les enroulements récepteurs sont envoyés à une unité d'analyse afin de déterminer la profondeur de l'objet,
***caractérisé***
- ***en ce que*** le champ magnétique de la boucle émettrice est reçu directement par un enroulement récepteur supérieur qui est placé à une extrémité supérieure de la sonde, et par un enroulement récepteur inférieur qui est placé à une extrémité inférieure de la sonde,
- ***en ce que*** les signaux reçus par les enroulements récepteurs supérieur et inférieur sont envoyés à une autre unité d'analyse, et
- ***en ce que*** l'autre unité d'analyse calcule l'éloignement de la sonde depuis la boucle émettrice à partir d'une différence entre les signaux reçus.

2. Procédé de recherche selon la revendication 1, ***caractérisé***
***en ce que*** la sonde est déplacée verticalement par rapport à la boucle émettrice et
***en ce que*** la sonde est descendue dans un trou de forage.

3. Procédé de recherche selon l'une quelconque des revendications précédentes 1 à 2, ***caractérisé en ce que*** l'on mesure la diminution des oscillations induites dans les enroulements récepteurs.

4. Procédé de recherche selon l'une quelconque des revendications précédentes 1 à 3,
***caractérisé***
***en ce que*** les différents canaux de mesure sont balayés à des instants prédéterminables et les signaux relevés sont traités par un montage à circuit, et/ou
***en ce que*** la totalité des canaux de réception est balayée et les signaux des différents canaux de réception sont traités par un montage à circuit.

5. Système de sonde électromagnétique pour localiser des objets situés sous la surface, en particulier dans le sol ou dans l'eau, en particulier pour appliquer le procédé selon l'une quelconque des revendications 1 à 5,
- avec une grande boucle émettrice stationnaire (1) pour émettre des champs magnétiques pulsés,
- avec une sonde (4) comportant un noyau de mesure magnétique (13) et au moins deux enroulements récepteurs (5), qui présentent une distance définie entre eux, et
- avec une unité d'analyse (6) qui est en liaison active avec les enroulements récepteurs (5), pour analyser les signaux reçus dans les enroulements récepteurs (5),
***caractérisé***
- ***en ce que*** chacun des enroulements récepteurs (5) est raccordé à un canal de réception (8),
- ***en ce qu****'un* enroulement récepteur supérieur (5a) et un enroulement récepteur inférieur (5b) sont prévus, qui sont conçus chacun pour la réception directe du champ magnétique émis par la boucle émettrice (1),
- ***en ce que*** l'enroulement récepteur supérieur (5a) est placé à une extrémité supérieure de la sonde (4) et l'enroulement récepteur inférieur (5b) à une extrémité inférieure de la sonde (4),
- ***en ce que,*** pour analyser les signaux reçus par les enroulements récepteurs supérieur et inférieur (5a, 5b) et pour calculer l'éloignement de la sonde (4) depuis la boucle émettrice (1), il est prévu une autre unité d'analyse (7) qui est en liaison active avec les enroulements récepteurs supérieur et inférieur (5a, 5b).

6. Système de sonde selon la revendication 5, ***caractérisé en ce* qu**'une pluralité d'enroulements récepteurs (5) est placée sur le noyau de mesure (13).

7. Système de sonde selon l'une quelconque des revendications 5 à 6, ***caractérisé en ce que*** les enroulements récepteurs (5) sont conformés avec une capacité et une inductance.

8. Système de sonde selon l'une quelconque des revendications 5 à 7, ***caractérisé en ce que*** la sonde (4) présente un émetteur interne d'impulsions (9), avec lequel un champ magnétique peut être émis par l'intermédiaire d'au moins deux enroulements (5a, 5b).

9. Système de sonde selon l'une quelconque des revendications 5 à 8, ***caractérisé en ce que*** les canaux de réception (5) sont munis d'un circuit d'échantillonnage et de maintien et sont raccordés à un microprocesseur (6).

10. Système de sonde selon l'une quelconque des revendications 5 à 9, ***caractérisé en ce que*** la sonde (4) est de configuration cylindrique.

11. Système de sonde selon l'une quelconque des revendications 5 à 10, ***caractérisé en ce que*** l'unité d'analyse et l'électronique associée sont placées dans la sonde (4) et/ou ***en ce que*** la sonde (4) est reliée par un câble (10) à une unité électronique externe (11).

12. Système de sonde selon l'une quelconque des revendications 5 à 11, ***caractérisé en ce qu'****un* système de positionnement télémétrique est prévu pour déterminer et représenter le lieu de l'objet par rapport à la boucle émettrice.
